# EUROPEAN PATENT APPLICATION

(11) **EP 0 544 480 A1**
(43) Date of publication of application: **02.06.1993**
(21) Application number: 92310682.7
(22) Date of filing: 23.11.1992
(51) Int. Cl.: B01D 53/32, B01D 53/36, A62D 1/00, B01J 19/12

(54) **Microwave and radio frequency sensitised oxidation**

(30) Priority: 23.11.1991 GB 9124938
(71) Applicant: ISAMBARD SERVICES LIMITED, Bury BL9 7NZ (GB); GEC ALSTHOM LIMITED, Rugby, Warwickshire CV21 1TB (GB)
(72) Inventor: Harper, David John, Timberhurst, Bury, BL9 7NZ (GB); Henson, Ronald, Stafford, ST17 0DF (GB)
(74) Representative: Low, Peter John

(57) **Abstract**

A method for oxidising pollutants so as to reduce pollutant emission by passing the pollutant over a transition metal or transition metal ion and exposing the metal or ion to radio frequency or microwave radiation.

## Description

This invention relates to the microwave or radio frequency sensitised oxidation of chemical substances and is particularly relevant to the oxidation of pollutants.

Certain gases which are emitted from some types of machinery, apparatus and installations such as incinerators, flue stacks, exhaust ventilation equipment or internal combustion engines contain pollutants. These pollutants may include any of the following:- dioxins, furans, volatile organic compounds, carbon monoxide, particulate carbon or foul smelling materials.

Some of these pollutants, for example dioxins, are highly toxic. It has proven expensive to oxidise these dioxins by known methods as high temperatures are necessary. Carbon particulates which are produced in diesel engines have not been successfully oxidised by known methods.

It is an object of the present invention to provide an apparatus and a method for substantially reducing the amount of pollutants emitted from various machinery, apparatus or installations such as any of those referred to above.

According to the first aspect of the present invention there is provided an apparatus for the oxidation of a chemical substance which is present in a fluid medium, said apparatus comprising at least one of a metal or metal ion, and means for exposing the substance and/or the metal or metal ion to at least one of microwave or radio frequency radiation, said apparatus further comprising means to pass the chemical substance within the vicinity of the metal or metal ion.

According to a second aspect of the present invention there is provided a method of oxidising a chemical substance which is present in a fluid medium, said method comprising exposing the substance and/or at least one of a metal or metal ion to at least one of radio frequency or microwave radiation while the chemical substance is passing within the vicinity of the metal or metal ion.

The fluid medium may be a gas or a liquid.

The chemical substance may include organic compounds such as any of the following or substituted derivatives thereof: aliphatic and aromatic hydrocarbons such as alkanes and alkenes, alcohols, esters, ketones and acids. Examples include: linear and branched chain alkanes containing up to 12 carbon atoms; linear and branched chain alkenes containing up to 12 carbon atoms; benzene, toluene, xylene (all three isomers) and polycyclic aromatics such as naphthalene and anthracene; methanol, ethanol, isomers of propanol, butanol and pentanol, formaldehyde, isomers of propanone, butanone, and pentanone in particular 2-butanone and 3-methyl-2-butanone; esters of acetic and benzoic acids such as methyl, ethyl, propyl, and butyl; and chlorinated aliphatic and aromatic compounds, such as 1,1,1-trichloroethane, dichloromethane, trichloroethylene, chloro and dichloro benzene.

The organic compounds present in the gas stream may be present as either liquid or solid aerosols or particulates. Such compounds would be high boiling aliphatic and aromatic hydrocarbons and their derivatives. Examples would be mellitic acid and anhydride, esters of phthalic acid such as dibutyl and dioctyl phthalate, organic esters of inorganic acids such as dialkyl sulphates, trialkyl and triaryl phosphates.

The gases treated may also include malodorous gases from animal products factories, food processing, including ventilated emissions from restaurants.

In a preferred embodiment of the invention the metal or metal from which the ion is derived is a transition metal. Preferred examples include metals and metal ions from the first transition series elements and from the transition elements of Group VIII of the periodic table; that is scandium, titanium, vanadium, chromium, manganese, iron, colbalt, nickel, copper, zinc, ruthenium, rhodium, palladium, osmium, iridium and platinum.

The following metals or metal ions are particularly preferred: chromium, manganese, iron, colbalt, nickel, copper, ruthenium and silver.

The metal or metal ion may be part of a semiconducting or ferromagnetic material, exemplified by ferrites and ferrates.

The metal or metal ion is preferably paramagnetic and may be located in a matrix such as a ceramic matrix comprising alumino-silicate. The matrix may form a coating on a ceramic body or be absorbed or adsorped onto the surface thereof.

The metal or metal ion may be introduced into the ceramic medium in any form, either as the element itself, as an oxide, salt or in any other chemical state. These metals or metal ions tend to be capable of existing in two or more oxidation states, any of which will serve for the purposes of the invention, providing they are paramagnetic at the operating temperature.

The heating process involved in either the manufacture of the ceramic medium and/or during microwave and/or radio frequency irradiation will tend to result in the formation of other chemical derivatives of the element.

A number of ligands may be associated with the metal ion so as to form a complex.

In order that the invention may be more readily understood a specific embodiment thereof will now be described by way of example only.

An open matrix of a ceramic material based for example on at least one alumino-silicate contains at least one metal ion which is preferably paramagnetic and is sensitive to microwave and or radio frequency radiation. Preferably the transition metal ion is adsorbed onto the surface layers of the ceramic matrix, where it is or will become chemically bound. This will concentrate the microwave energy at the fluid/solid interface where it will be most advantageous. Transition metal ions have been found to be particularly effective. The ceramic is located in conjunction with a microwave or radio frequency generator, in such a way that the electromagnetic energy is concentrated in the ceramic and not dissipated to the surroundings. The ceramic material may be in one or more of a variety of physical forms that present a high surface area in comparison to its volume, or mass. For example the physical form can be selected from granules, open ended cylinders, spheres, rods, grids, two or three dimensional lattices or meshes. The exposure of the paramagnetic transition metal ions to microwave radiation causes the surface of the transition metal ion to reach a high surface temperature greatly in excess of temperatures normally achieved by incinerating plant or internal combustion engines. This high temperature is incidental in the oxidation of pollutants contained in gases which are passed through the apparatus. The possible catalytic effect of the metal ion may also enhance the oxidation process.

Gases from incinerators, flue stacks, exhaust ventilation equipment, internal combustion engines or the like are passed through the open matrix in the presence of atmospheric oxygen.

By passing the gases containing pollutants over the microwave activated heated catalytic ceramic the facile oxidation of almost all organic compounds including carbon particulates and dioxins can be achieved.

It is noted that the radiation may also activate the chemical substance which is to be oxidised. In this case the frequency of the radiation might be separately tuned to specific chemical substances or constituents thereof and to the catalyst system.

The apparatus and method of the present invention have many applications for example in the thermal treatment of Municipal solid waste, odour control, emissions to atmosphere of volatile organic compounds and emissions of contaminants from the exhaust of petrol and diesel engines.

The invention provides a method of incinerating polychlorinated biphenyls without significant emission to atmosphere of the associated dioxins. Incineration of other wastes that could also produce dioxins will also benefit from no significant emission to atmosphere of the latter.

The invention also provides an alternative method of removing pollutants such as carbon monoxide from the exhaust of internal combustion engines.

The invention also provides a method of removing carbon particulates from the exhaust fumes of diesel engines.

The invention would also be useful in reducing ventilated organic emissions (VOC'S) from ventilation control equipment, for example in factories or plant manufacturing and/or using paints, inks, adhesives and degreasing agents.

It is to be understood that the above described embodiments of the invention are by way of illustration only. Many modifications and variations are possible.

## Claims

1. A method of oxidising a chemical substance which is present in a fluid medium, said method comprising exposing the substance and/or at least one of a metal or metal ion to at least one of radio frequency or microwave radiation while the chemical substance is passing within the vicinity of the metal or metal ion.

2. A method as claimed in claim 1, characterised in that the metal or metal ion is paramagnetic.

3. A method as claimed in claim 1 or claim 2, characterised in that the metal or metal from which the ion is derived is a transition metal.

4. A method as claimed in any preceding claim, characterised in that the metal or metal from which the ion is derived comprises any of the following: scandium, titanium, vanadium, chromium, manganese, iron, colbalt, nickel, copper, zinc, ruthenium, rhodium, palladium, osmium, iridium or platinum.

5. A method as claimed in any preceding claim, characterised in that the metal or metal ion is incorporated into a semiconducting or ferromagnetic material.

6. A method as claimed in any preceding claim, characterised in that the metal or metal ion is located in a ceramic matrix.

7. A method as claimed in claim 6, characterised in that the ceramic matrix comprises alumino silicate material.

8. A method as claimed in any preceding claim, characterised in that the chemical substance includes any of the following or substituted derivatives thereof: aliphatic and aromatic hydrocarbons, alcohols, esters, ketones and acids.

9. A method as claimed in any preceding claim, characterised in that the chemical substance comprises any of the following: mellitic acid, mellitic anhydride, esters of phthalic and organic esters of inorganic acids.

10. An apparatus for the oxidation of a chemical substance, which is present in a fluid medium, said apparatus comprising at least one of a metal or metal ion, and means for exposing the substance and/or the metal or metal ion to at least one of microwave or radio frequency radiation, said apparatus further comprising means operative to pass the chemical substance within the vicinity of the metal or metal ion.
